# EUROPEAN PATENT SPECIFICATION

(11) **EP 3 383 823 B1**
(45) Date of publication and mention of the grant of the patent: **06.01.2021**
(21) Application number: 16802101.2
(22) Date of filing: 30.11.2016
(51) Int. Cl.: C04B 35/14, C04B 35/634, C04B 35/638, C04B 38/00, G01N 33/552, C09D 7/40

(54) **FRUSTULE FOAMS**
FRUSTELSCHAUMSTOFFE
MOUSSES DE FRUSTULES

(30) Priority: 01.12.2015 GB 201521175
(43) Date of publication of application: 10.10.2018
(73) Proprietor: Universiteit Antwerpen, 2000 Antwerpen (BE)
(72) Inventor: BLUST, Ronny, 2600 Berchem (BE); LENAERTS, Silvia, 2600 Berchem (BE); TYTGAT, Tom, 2900 Schoten (BE); VAN EYNDE, Erik, 2140 Borgerhout (BE)
(74) Representative: DenK iP bv
(86) International application number: PCT/EP2016/079245
(87) International publication number: WO 2017/093296

(56) References cited:
- EP-A1- 2 899 784
- EP-A2- 1 776 878
- US-A1- 2014 134 503
- ERIK VAN EYNDE ET AL: "Biotemplated diatom silica-titania materials for air purification", PHOTOCHEMICAL AND PHOTOBIOLOGICAL SCIENCES, vol. 12, no. 4, 1 January 2013 (2013-01-01), pages 690-695, XP055259823, GB ISSN: 1474-905X, DOI: 10.1039/C2PP25229E
- ERIK VAN EYNDE ET AL: "Effect of pretreatment and temperature on the properties of Pinnularia biosilica frustules", RSC ADV., vol. 4, no. 99, 1 January 2014 (2014-01-01), pages 56200-56206, XP055331339, DOI: 10.1039/C4RA09305D

## Description

### Technical field of the invention

The present invention relates to a method for making a solid self-supporting foam comprising frustules and/or frustule powder.

### Background of the invention

The most important obstacle that impedes the industrial breakthrough of photocatalysis for air purification is the problem of inadequate immobilization of the photocatalyst in a reactor. At the moment, the highest photocatalytic performance is achieved by using ultrafine nanocrystalline titania powders. These nanostructured titania particles can have large surface area and can promote charge separation at the surface. In addition, it was reported that the nanoscale titania has enhanced oxidation capabilities compared to bulk TiO₂. However, for the large-scale environmental treatment the small size and the morphology of the particles becomes a large problem for the treatment of both water and gas phase. Regeneration of the photocatalysts is crucial because of both health and economic reasons. Mostly this is performed by immobilization of the photocatalysts onto a substrate. This strategy comprises several disadvantages including the reduction of amount of active sites and photon efficiency. In addition, several studies indicate that the long-term stability of most titania coatings cannot be guaranteed, with risk of nanoparticles released in the environment. In the water phase, different alternative recycling and separation processes have been developed including conventional sedimentation, crossflow filtration and membrane filtration. In the gas phase a feasible alternative for immobilization onto a larger substrate is not available.

Metabolic insertion of titania into the frustules of diatoms can deliver a surprising, out-of-the-box solution for this problem. Diatoms are single-celled, eukaryotic microalgae (2-2000 µm) that self-assemble Si(OH)₄ into intricate silica cell walls, called frustules. These diatom frustules are formed under ambient conditions and consist of hydrated silica with specific 3D morphologies, micro-, meso- and macroporosity and high surface area (10-250 m²/g). The hierarchical organization of the porous nanostructures of diatom frustules exceeds the capabilities of present day material science engineering and can be used in applications in chromatography, membrane technology, drug delivery and adsorption processes.

By metabolically incorporating titanium dioxide in the porous 3D template offered by diatom frustules (Jeffryes, C., et al. (2008), Acs Nano, 2(10), 2103-2112), a biogenic, well-immobilized silica-titania material is obtained. In this way the size of the photocatalytic materials is increased from the nanoscale (20-100 nm) to the microscale (20-30 µm) implicating less environmental and health issues. However, such microscale photocatalytic materials remain relatively difficult to handle for large scale industrial photocatalytic air purification systems; there is thus still a need in the art for good ways to handle titanium dioxide without compromising its properties.

Erik Van Eynde et al.: "Biotemplated diatom silica-titania materials for air purification", Photochemical and Photobiological Sciences, vol. 12, no. 4, 1 January 2013 (2013-01-01), pages 690-695, discloses a frustule-titania powder.

### Summary of the invention

It is an object of the present invention to provide a method for immobilizing frustules and/or frustule powder.

It is an advantage of embodiments of the present invention that frustules incorporating TiO₂ can be immobilized in the solid foams.

It is an advantage of embodiments of the present invention that the solid foams allow a good accessibility of reagents and light to the immobilized frustules.

It is an advantage of embodiments of the present invention that the intrinsic high surface area of the frustules and/or frustule powder is largely or completely retained in the solid foams.

It is an advantage of embodiments of the present invention that self-supporting foams of the frustules can be made, thereby removing the need for an additional supporting material while ensuring a good exposure of the frustules.

It is an advantage of embodiments of the present invention that solid foams of the frustules can be used in air purification systems.

The above objective is accomplished by a method according to the present invention described in the appended claims 1-9.

The present invention relates to a method for making a solid self-supporting foam, comprising frustules and/or frustule powder, the method comprising:
a. forming a polyacrylamide gel comprising frustules and/or frustule powder
b. sintering the frustules into a monolithic structure and
c. calcining the gel,
wherein said sintering and said calcining are performed as part of a single heating step.

Particular and preferred aspects of the invention are set out in the accompanying independent and dependent claims. Features from the dependent claims may be combined with features of the independent claims and with features of other dependent claims as appropriate and not merely as explicitly set out in the claims.

Although there has been constant improvement, change and evolution of devices in this field, the present concepts are believed to represent substantial new and novel improvements, including departures from prior practices, resulting in the provision of more efficient, stable and reliable devices of this nature.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

### Brief description of the drawings

Fig. 1 shows different foams according to example 1.
Fig. 2 shows a foam according to example 2.
Fig. 3 (a), (e) and (i), show HAADF-STEM images of silica-titania frustules cultivated according to example 3 at different magnifications; (b), (f) and (j) show EDX elements mapping results of Si, corresponding to (a), (e) and (i) respectively; (c), (g) and (k) show EDX elements mapping results of Ti, corresponding to (a), (e) and (i) respectively; (d), (h) and (I) show overlays of (b)-(c), (f)-(g) and (j)-(k), respectively.

### Description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second, third and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

Furthermore, some of the embodiments are described herein as a method or combination of elements of a method that can be implemented by a processor of a computer system or by other means of carrying out the function. Thus, a processor with the necessary instructions for carrying out such a method or element of a method forms a means for carrying out the method or element of a method. Furthermore, an element described herein of an apparatus embodiment is an example of a means for carrying out the function performed by the element for the purpose of carrying out the invention.

In the description provided herein, numerous specific details are set forth. However, it is understood that embodiments of the invention may be practiced without these specific details. In other instances, well-known methods, structures and techniques have not been shown in detail in order not to obscure an understanding of this description.

A solid foam typically comprises a dispersion of gas bubbles (also called 'gas pockets') in a solid. These gas bubbles may be a distribution of gas bubbles of different sizes (i.e. it is polydisperse). A gas bubble in a solid foam may typically have a diameter larger than 500 nm, preferably larger than 1 µm. Within the present invention, the solid foam preferably comprises at least a plurality of gas bubbles with a diameter larger than 10 µm, preferably larger than 100 µm, most preferably larger than 1 mm, such as larger than 1 cm. A solid foam may typically be characterized as being a closed-cell foam (i.e. when the gas is typically present in closed, discrete bubbles) or an open-cell foam (i.e. when the bubbles are typically interconnected and forming an extended network of bubbles having openings between them). While a solid foam may thus be porous, it should nevertheless be appreciated that not all porous materials are solid foams. For example, a single frustule as such is porous but the pores therein are not gas bubbles.

The present invention relates to a method for forming a solid self-supporting foam comprising frustules and/or frustule powder, the method comprising:
a. forming a polyacrylamide gel comprising frustules
b. sintering the frustules into a monolithic structure and
c. calcining the gel,
wherein said sintering and said calcining are performed as part of a single heating step.

The inclusion of frustules and/or frustule powder into solid foams results in immobilization of the frustules into macroscopic structures that are easy to handle. These frustule foams may advantageously be used in the areas of chromatography, membrane technology and adsorption.

In embodiments, the solid foam may be an open-cell foam.

Open-cell solid foams advantageously allow easy access of fluids, gasses and light to the pores and inner surface of the foam.

In embodiments, the solid foam may comprise 20 or more weight percent frustules, preferably 50 or more, yet more preferably 75 or more, most preferably 95 or more. For instance, the foam may consist entirely of frustules.

A frustule powder comprises grinded frustules, i.e. frustule parts instead of whole frustules. A typical example is diatomaceous earth. Diatomaceous earth has the advantage to be easily available. Frustules are advantageous when compared to frustule powders because they form foams with much higher surface area and better mechanical strength.

Solid foams containing a large quantity of frustules and/or frustule powder can advantageously leverage the benefits of these frustules to their full extend. For example, solid foams containing a large quantity of catalytically active frustules can display a large catalytic activity.

The solid foam is a self-supporting foam.

Solid foams in which the frustules can support themselves allow them to be made without the need for an additional supporting material. This can advantageously lead to a maximum amount of frustules within a given solid foam structure, thereby allowing a large frustule surface area and activity.

In embodiments, the frustules (or frustule powder) in the solid foam may comprise TiO₂. Preferably, the TiO₂ comprises TiO₂ in its anatase form. Preferably the TiO₂ consists of anatase.

TiO₂ is a photocatalytically active component which may, for instance, beneficially be used in purification processes, such as air purification processes. Frustule foams comprising TiO₂ advantageously immobilize this TiO₂ into an easy to handle structure with a huge surface area, while allowing easy access of gasses, fluids and light to the TiO₂ particles; thereby providing the TiO₂ that is relevant towards industrial application.

In preferred embodiments, the frustules (or the frustule powder) may comprise TiO₂ through means of metabolical incorporation.

Metabolical incorporation advantageously ensures a good immobilization and nanocrystallinity of the TiO₂, while also retaining a high porosity, and thus surface area, of the frustules.

In other embodiments, the frustules may comprise TiO₂ through a variety of chemical or physical methods, such as a variety of chemical and physical layer deposition methods.

Chemical or physical methods may lead to a loss of surface area; e.g. small pores, channels and other features of the frustules may be covered up by a layer of TiO₂.

In embodiments, the solid foam may have a surface area of 7 m²/g or more, preferably 14 m²/g or more, more preferably 70 m²/g or more, most preferably 75 m²/g or more.

A large surface is advantageous in many applications, such as in catalytic applications.

In embodiments, the solid foam may have a mechanical strength of 5 kN/m² or more, preferably 14 kN/m² or more, more preferably 18 kN/m² or more. For instance, the solid foam may have a mechanical strength up to 26 kN/m².

In order to be easily handled and integrated into a variety of systems, the solid foams advantageously have a sufficient mechanical strength, allowing them to resist outside forces without breaking, crumbling or collapsing.

In embodiments, the frustules are obtainable by removing the organic matter of diatoms, thereby uncovering the frustules.

In some embodiments, removing the organic matter of the diatoms comprises chemically removing the organic matter, followed by calcination. For example, removal of the organic matter using HNO₃ and subsequent calcination at 550 °C advantageously results in frustules with a high purity. Alternatively, chemical removal using H₂O₂ or sodium dodecyl sulphate and ethylenediaminetetraacetic acid (SDS/EDTA) may be used, while calcination may be performed at 105 to 750 °C.

In other embodiments, simply calcining the frustules, without prior chemical treatment, may sufficiently remove the organic matter and uncover the frustules.

For example, simple calcination at 550 °C advantageously results in frustules with a large surface area.

The method advantageously allows self-supporting frustule solid foams to be made.

The sintering and calcining is performed as part of a single heating step.

Sintering and calcining may advantageously be combined into a single heating treatment, thereby reducing the number of steps to be perfomed.

In embodiments, the heating step may comprise heating up to 650 °C for 2 to 4 hours. The heating step may for instance consist of heating up the gel at 5 °C/min up to a temperature of 650 °C for 3h.

The gel is a polyacrylamide gel.

A polyacrylamide gel can be straightforwardly synthesized and its properties can be suitably tuned so as to obtain a solid foam with the desired characteristics, e.g. porosity, surface area and mechanical strength.

In embodiments, the polyacrylamide gel may be obtained from a precursor composition comprising acrylamide and N-N'-methylenebis acrylamide.

The inclusion of N-N'-methylenebisacrylamide to the reaction advantageously leads to a crosslinked polyacrylamide.

In preferred embodiments, the precursor composition may be an aqueous composition.

In embodiments, the precursor composition may additionally comprise a blowing agent such as e.g. urea.

Urea may advantageously act as a blowing agent for the gel.

In embodiments, the precursor composition may additionally comprise titanium(IV) oxysulfate.

The pH of the precursor solution influences the characteristics of the solid foam; titanium(IV) oxysulfate may advantageously be used to alter this pH to the desired value.

In embodiments, the polymerization of the precursor solution may be initiated using ammonium persulfate.

Ammonium persulfate initiates a radical polymerization of the precursor solution to the polyacrylamide gel.

In embodiments, the frustules may comprise TiO₂ and may be obtainable by:
a. providing diatoms comprising organic matter and the frustules,
b. providing a growing medium for the diatoms,
c. adding a titanium complex to the growing medium of the diatoms and
d. removing the organic matter of the diatoms, thereby uncovering the frustules;
   wherein the titanium complex has a solubility above 50 µM and a stability constant below 10²⁵ in said growing medium.

Foams made of frustules comprising TiO₂ may advantageously be used in photocatalytic applications, such as air purification processes.

The addition of a soluble titanium complex leads to the metabolical incorporation of TiO₂ into the frustules. However, the stability constant of the titanium complex may not be too high; as the titanium in such highly stable form is not readily available for incorporation, due to this stability.

In embodiments, the titanium complex may be selected from a Ti-iminodiacetic acid-H₂O₂ complex (Ti-H₂O₂), a Ti-triethanolamine complex (Ti-TEA), a Ti-ethylenediamine-tetraacetic acid complex (Ti-EDTA), and a titanium(IV)bis(ammonium lactato) dihydroxide (Ti-TiBaldH) complex.

In some embodiments, removing the organic matter of the diatoms, thereby uncovering the frustules, comprises chemically removing the organic matter, followed by calcination. For example, removal of the organic matter using HNO₃ and subsequent calcination at 550 °C advantageously results in frustules with a high purity. Alternatively, chemical removal using H₂O₂ or sodium dodecyl sulphate and ethylenediaminetetraacetic acid (SDS/EDTA) may be used, while calcination may be performed at 105 to 750 °C.

In other embodiments, simply calcining the frustules, without prior chemical treatment, may sufficiently remove the organic matter and uncover the frustules.

For example, simple calcination at 550 °C advantageously results in frustules with a large surface area.

The invention will now be described by a detailed description of several embodiments of the invention. It is clear that other embodiments of the invention can be configured according to the knowledge of the person skilled in the art without departing from the true technical teaching of the invention, the invention being limited only by the terms of the appended claims.

### Example 1: solid foams from diatomaceous earth

Solid foams from diatomaceous earth were prepared. The first step is the formation of a polyacrylamide gel using 1.0 g diatomaceous earth, 0.5 g acrylamide, 0.004 g N-N'-methylenebisacrylamide and 5 g distilled water that was thoroughly mixed. 1 g urea was added to the mixture. The pH of the mixture is subsequently adjusted with TiOSO₄. Different amounts (0-1.6 mL) of a 200 gL⁻¹ TiOSO₄ solution were added to the mixture to adjust the pH. Finally, the initiation of the polymerization is performed by adding 0.045 g ammonium persulfate and the solution was then allowed to gel in the furnace at 90 °C for 1 h. The resulting gels were heated at 5 °C/min up to a temperature of 650 °C for 3 h.

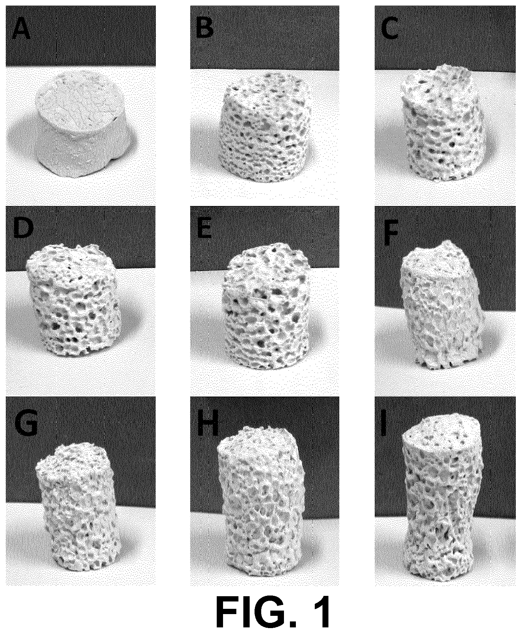

We now refer to Fig. 1. Different solid foams are obtained depending on the amount of TiOSO₄ added. The characteristics of the different foams are displayed in the following table:

| Code | TiOSO₄ solution added (µL) | pH | Density (kg.m⁻³) | Mechanical strength (kN.m⁻²) | Surface area (m².g⁻¹) |
|---|---|---|---|---|---|
| A | 0 | 9,10 | 376 | 25,8 | 7 |
| B | 200 | 6,25 | 277 | 15,0 | 11 |
| C | 400 | 5,72 | 202 | 15,7 | 11 |
| D | 600 | 5,63 | 195 | 16,3 | 13 |
| E | 800 | 5,48 | 188 | 13,4 | 14 |
| F | 1000 | 5,20 | 170 | 12,1 | 13 |
| G | 1200 | 5,00 | 164 | 10,8 | 13 |
| H | 1400 | 3,40 | 128 | 9,3 | 11 |
| I | 1600 | 2,68 | 132 | 5,8 | 14 |

If foam A is left aside because of the lack of macropores, optimum mechanical strength was found for foam D, with 16.3 kN/m². The pH of the liquid mixture that resulted in foam D was 5.63.

The surface area of the diatomaceous earth foams varied between 7 and 14 m²g⁻¹. The low surface area can be explained by the low surface area of the used diatomaceous earth. The surface area of the used diatomaceous earth is 9 m²g⁻¹. The surface area of the diatomaceous earth is thus maintained by introducing the diatomaceous earth into a foam monolith.

### Example 2: solid foams from freshly cultivated frustules

A foam from freshly cultivated diatom frustules was prepared. The same protocol as described in example 1 was used, but the 1.0 g diatomaceous earth was replaced by 1.0 g of *Pinnularia* frustules.

To this end, the freshwater diatom species *Pinnularia* sp. (MIC 9-8) was obtained from the DCC culture collection (Ghent, Belgium) and was grown in freshwater WC medium with following composition (per liter): 85.0 mg NaNO₃, 8.7 mg K₂HPO₄, 12.6 mg NaHCO₃, 37.0 mg MgSO₄.7H₂O, 28.4 mg Na₂SiO₃.9H₂O, 36.7 mg CaCl₂.2H₂O and 5 mL trace elemental solution. This trace elemental solution (per liter) contains 630.0 mg FeCl₃.6H₂O, 872.0 mg EDTA.Na₂.2H₂O, 36.0 mg MnCl₂.4H₂O, 4.4 mg ZnSO₄.7H₂O, 2.0 mg CoCl₂.6H₂O, 36.0 mg Na₂MoO₄.2H₂O, 2.0 mg CuSO₄.5H₂O, 200.0 mg H₃BO₃, 20.0 mg thiamin-HCI, 0.1 mg biotin and 0.1 mg vitamin B12. *Pinnularia* sp. was cultured in 1 L photobioreactors aerated with sterile air at 20 °C using a 16 h light/8 h dark cycle. In order to obtain high biomass concentration the cultivation medium is refreshed daily. Daily refreshment was performed by allowing diatom cells to settle at the bottom of the reactor in non-aerated conditions for 1 hour, subsequently remove the upper medium layer (approximately 800 - 900 mL) by decantation and replenish the culture with fresh WC medium. The living diatoms were harvested after 2-3 weeks of culturing. The harvested *Pinnularia* cells were centrifuged and washed several times with distilled water to remove all medium compounds.

The organic matter of the harvested cells was removed from the frustules by treatment with HNO₃. This cleaning method was chosen because it results in organic-free silica without impurities. The cleaned frustules were subsequently washed three times with distilled water and calcined at 550 °C. The as obtained frustules are applied in the foam structure as described in example 1. The foam fabrication is performed at a pH of 5.6.

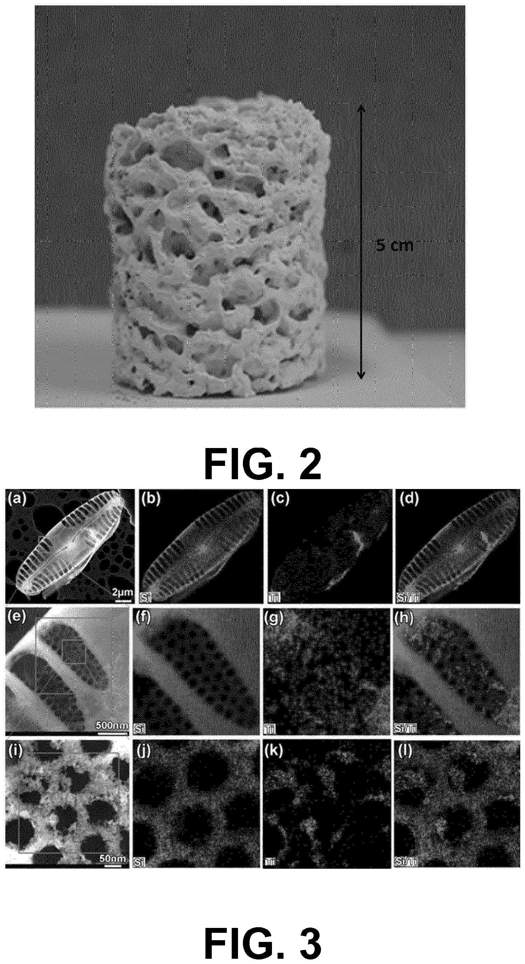

We now refer to Fig. 2. A solid foam of the freshly cultivated frustules is obtained. The characteristics of this foam are displayed in the following table:

| Property | Value |
|---|---|
| Density (kg.m⁻³) | 125 |
| Mechanical strength (kN.m⁻²) | 18,3 |
| Surface area (m².g⁻¹) | 75 |

Compared to the diatomaceous earth foam at pH 5.6 (example 1-foam D), the frustule foam exhibits lower density and higher mechanical strength and surface area.

### Example 3: cultivating frustules with metabolically incorporated TiO₂

Example 2 is repeated, but this time the WC medium is spiked with Ti-TiBaldH to obtain an initial titanium concentration of 9 mg/L. The initial pH of the cultivation media is kept constant in the range of 7.6-8.4 by addition of sodium hydroxide. In this way, diatoms which have TiO₂ metabolically incorporated into their frustules are obtained.

We now refer to Fig. 3. EDX elements mapping shows that the TiO₂ particles are mostly aggregated on the frustule surface and more specifically on the inner walls of the frustule mesopores. These diatoms with incorporated TiO₂ can further be used in the foam procedure such as described in example 2.

### Example 4: alternative conditions for cultivating frustules with metabolically incorporated TiO₂

As an alternative to the Ti-TiBaldH of example 3, a Ti-H₂O₂ complex, a Ti-TEA complex or a Ti-EDTA complex has been used. Different titanium concentrations, ranging from 3 mg/L to 33 mg/L, are also possible, but growth inhibition occurs at high titanium concentrations. Inhibition is observed for concentrations of 15, 21, 27 and 33 mg/L for Ti-EDTA, Ti-TiBaldH, Ti-TEA and Ti-H₂O₂, respectively.

It is to be understood that although preferred embodiments, specific constructions and configurations, as well as materials, have been discussed herein for the method according to the present invention, various changes or modifications in form and detail may be made without departing from the scope of this invention. For example, any formulas given above are merely representative of procedures that may be used. Functionality may be added or deleted from the block diagrams and operations may be interchanged among functional blocks.

## Claims

1. A method for making a solid self-supporting foam, comprising frustules and/or frustule powder, the method comprising:
a. forming a polyacrylamide gel comprising frustules and/or frustule powder,
b. sintering said frustules and/or frustule powder into a monolithic structure and
c. calcining said gel,
wherein said sintering and said calcining are performed as part of a single heating step.

2. The method according to claim 1, wherein said heating step comprises heating up to 650 °C for 2 to 4 hours.

3. The method according to any of the preceding claims, wherein said polyacrylamide gel is obtained from a precursor composition comprising acrylamide and N-N'-methylenebisacrylamide.

4. The method according to claim 3, wherein said precursor composition additionally comprises urea.

5. The method according to claim 3 or 4, wherein said precursor composition additionally comprises titanium(IV) oxysulfate.

6. The method according to any of claims 3 to 5, wherein polymerization of the precursor solution is initiated using ammonium persulfate.

7. The method according to any of the preceding claims, wherein said frustules comprise TiO₂ and are obtainable by:
a. providing diatoms comprising organic matter and said frustules,
b. providing a growing medium for said diatoms,
c. adding a titanium complex to said growing medium of said diatoms and
d. removing said organic matter of said diatoms, thereby uncovering said frustules;
wherein said titanium complex has a solubility above 50 µM and a stability constant below 10²⁵ in said growing medium.

8. The method according to claim 7, wherein said titanium complex is selected from a Ti-iminodiacetic acid-H₂O₂ complex, a Ti-triethanolamine complex, a Ti-ethylenediaminetetraacetic acid complex or titanium(IV)bis(ammonium lactato)dihydroxide.

9. The method according to claim 7 or 8, wherein removing said organic matter of said diatoms, thereby uncovering said frustules, comprises treating said diatoms with an acid and calcining said frustules.

## Patentansprüche

1. Ein Verfahren zur Herstellung eines festen, selbsttragenden Schaums, der Frusteln und/oder Frustelpulver umfasst, wobei das Verfahren umfasst:
a. Bilden eines Polyacrylamidgels, umfassend Frusteln und/oder Frustelpulver,
b. Sintern der Frusteln und/oder des Frustelpulvers zu einer monolithischen Struktur und
c. Kalzinieren des Gels,
wobei das Sintern und das Kalzinieren als Teil eines einzigen Erhitzungsschritts durchgeführt werden.

2. Das Verfahren nach Anspruch 1, wobei der Erwärmungsschritt ein Erwärmen auf 650 °C für 2 bis 4 Stunden umfasst.

3. Das Verfahren nach einem der vorstehenden Ansprüche, wobei das Polyacrylamidgel aus einer Vorläuferzusammensetzung erhalten wird, die Acrylamid und N-N'-Methylenbisacrylamid umfasst.

4. Das Verfahren nach Anspruch 3, wobei die Vorläuferzusammensetzung zusätzlich Harnstoff umfasst.

5. Das Verfahren nach Anspruch 3 oder 4, wobei die Vorläuferzusammensetzung zusätzlich Titan (IV)-oxysulfat umfasst.

6. Das Verfahren nach einem der Ansprüche 3 bis 5, wobei die Polymerisation der Vorläuferlösung unter Verwendung von Ammoniumpersulfat eingeleitet wird.

7. Das Verfahren nach einem der vorstehenden Ansprüche, wobei die Frusteln TiO₂ umfassen und erhältlich sind durch:
a. Zur Verfügung stellen von Diatomeen, die organisches Material und die Frusteln umfassen,
b. Zur Verfügung stellen eines Kultursubstrats für die Diatomeen,
c. Hinzufügen eines Titankomplexes zu dem Wachstumsmedium der Diatomeen und
d. Entfernen der organischen Substanz der Diatomeen, wodurch die Frusteln freigelegt werden;
wobei der Titankomplex eine Löslichkeit über 50 µM und eine Stabilitätskonstante unter 10²⁵ in dem Wachstumsmedium aufweist.

8. Das Verfahren nach Anspruch 7, wobei der Titankomplex ausgewählt ist aus einem Ti-Iminodiessigsäure-H₂O₂-Komplex, einem Ti-Triethanolaminkomplex, einem Ti-Ethylendiamintetraessigsäure-Komplex oder Titan (IV)bis(ammonium-lactato)dihydroxid.

9. Das Verfahren nach Anspruch 7 oder 8, wobei das Entfernen des organischen Materials der Diatomeen, wodurch die Frusteln freigelegt werden, Behandeln der Diatomeen mit einer Säure und Kalzinieren der Frusteln umfasst.

## Revendications

1. Un procédé de fabrication d'une mousse autoportante solide, comprenant des frustules et/ou de la poudre de frustules, le procédé comprenant les étapes consistant à :
a. former un gel de polyacrylamide comprenant des frustules et/ou de la poudre de frustules,
b. fritter lesdits frustules et/ou poudre de frustules pour obtenir une structure monolithique, et
c. calciner ledit gel,
dans lequel ledit frittage et ladite calcination sont effectués dans le cadre d'une étape de chauffage unique.

2. Le procédé selon la revendication 1, dans lequel ladite étape de chauffage suppose de chauffer l'élément jusqu'à 650 °C pendant 2 à 4 heures.

3. Le procédé selon l'une quelconque des revendications précédentes, dans lequel ledit gel de polyacrylamide est obtenu à partir d'une composition précurseur comprenant de l'acrylamide et du N,N'-Méthylènebisacrylamide.

4. Le procédé selon la revendication 3, dans lequel ladite composition précurseur comprend par ailleurs de l'urée.

5. Le procédé selon la revendication 3 ou 4, dans lequel ladite composition précurseur comprend par ailleurs de l'oxysulfate de titane(IV).

6. Le procédé selon l'une quelconque des revendications 3 à 5, dans lequel la polymérisation de la solution précurseur est initiée en utilisant du persulfate d'ammonium.

7. Le procédé selon l'une quelconque des revendications précédentes, dans lequel lesdits frustules comprennent du TiO₂ et sont obtenus par :
a. la fourniture de diatomées comprenant de la matière organique et desdits frustules,
b. la fourniture d'un milieu de culture pour lesdites diatomées,
c. l'ajout d'un complexe de titane audit milieu de culture desdites diatomées, et
d. l'élimination de ladite matière organique desdites diatomées, découvrant ainsi lesdits frustules ;
dans lequel ledit complexe de titane présente une solubilité supérieure à 50 µm et une constante de stabilité inférieure à 10²⁵ dans ledit milieu de culture.

8. Le procédé selon la revendication 7, dans lequel ledit complexe de titane est choisi parmi un complexe d'acide Ti-iminodiacétique H₂O₂, un complexe de Ti-triéthanolamine, un complexe d'acide Ti-éthylènediaminetétraacétique ou du dihydroxyde de titane(IV)bis(lactate d'ammonium).

9. Le procédé selon la revendication 7 ou 8, dans lequel l'élimination de ladite matière organique desdites diatomées, découvrant ainsi lesdits frustules, comprend le traitement desdites diatomées avec un acide et la calcination desdits frustules.
